(19) Europäisches Patentamt / European Patent Office / Office européen des brevets

(11) **EP 4 465 407 A1**

(12) **EUROPEAN PATENT APPLICATION**
published in accordance with Art. 153(4) EPC

(43) Date of publication:
**20.11.2024  Bulletin 2024/47**

(21) Application number: **23792220.8**

(22) Date of filing: **20.04.2023**

(51) International Patent Classification (IPC):
*H01M 10/0585* (2010.01)      *H01M 4/04* (2006.01)
*H01M 4/13* (2010.01)          *H01M 4/139* (2010.01)
*H01M 4/62* (2006.01)          *H01M 10/052* (2010.01)
*H01M 4/02* (2006.01)

(52) Cooperative Patent Classification (CPC):
**H01M 4/02; H01M 4/04; H01M 4/13; H01M 4/139;
H01M 4/62; H01M 10/052; H01M 10/0585;
Y02E 60/10; Y02P 70/50**

(86) International application number:
**PCT/KR2023/005413**

(87) International publication number:
**WO 2023/204646 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.04.2022  KR 20220049212**

(71) Applicant: **LG Energy Solution, Ltd.
Seoul 07335 (KR)**

(72) Inventors:
• **KWAK, Sang-Min**
  **Daejeon 34122 (KR)**
• **YOO, Kwang-Ho**
  **Daejeon 34122 (KR)**
• **SHIN, Dong-Oh**
  **Daejeon 34122 (KR)**
• **LEE, Nam-Jeong**
  **Daejeon 34122 (KR)**
• **LEE, Ho-Chan**
  **Daejeon 34122 (KR)**

(74) Representative: **Plasseraud IP
104 Rue de Richelieu
CS92104
75080 Paris Cedex 02 (FR)**

(54) **ELECTRODE ASSEMBLY AND SECONDARY BATTERY COMPRISING SAME**

(57)    Disclosed is an electrode assembly including: a mono-cell group including at least one mono-cell; a single-sided electrode stacked on at least one side of the upper outermost side and the lower outermost side of the mono-cell group; and a separator interposed between the mono-cell group and the single-sided electrode, wherein the single-sided electrode includes a current collector and an electrode layer disposed merely on one side of the current collector, the electrode layer has a porosity of 30% or less, and the single-sided electrode shows a curl of 30 mm or less. Also disclosed are a secondary battery including the electrode assembly, and an energy storage system.

FIG. 8

EP 4 465 407 A1

**Description**

TECHNICAL FIELD

The present disclosure relates to an electrode assembly and a secondary battery including the same. Particularly, the present disclosure relates to an electrode assembly having high energy density and excellent bending characteristics, and a secondary battery including the same, and an energy storage system comprising the secondary battery.

The present application claims priority to Korean Patent Application No. 10-2022-0049212 filed on April 20, 2022 in the Republic of Korea, the disclosures of which are incorporated herein by reference.

BACKGROUND ART

Due to a rapid increase in use of fossil fuel, there has been an increasing need for use of substitute energy and clean energy. The most actively studied field as a part of attempts to meet such a need is the field of power generation and power storage using electrochemistry. Currently, typical examples of electrochemical devices using electrochemical energy include secondary batteries, and application thereof has been extended gradually. A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid.

There has been an attempt to apply a single-sided electrode to the outermost layer of a full cell in order to maximize the energy density of such a secondary battery.

However, in the case of a single-sided electrode, a phenomenon of bending, i.e. curling of the electrode occurs significantly as compared to a double-sided electrode, and thus there is a problem in that defect generation is increased in a step of assemblage when such a single-sided electrode causing significant bending is used.

Therefore, there is an imminent need for developing an electrode assembly capable of solving the above-mentioned problem.

DISCLOSURE

Technical Problem

The present disclosure is designed to solve the problems of the related art, and therefore the present disclosure is directed to providing an electrode assembly having improved curling characteristics while showing maximized energy density, and a secondary battery including the same.

Technical Solution

In one aspect of the present disclosure, there is provided an electrode assembly according to any one of the following embodiments.

According to the first embodiment of the present disclosure, there is provided an electrode assembly including:

a mono-cell group including at least one mono-cell;
a single-sided electrode stacked on at least one side of an upper outermost side and a lower outermost side of the mono-cell group; and
a separator interposed between the mono-cell group and the single-sided electrode,
wherein the single-sided electrode includes a current collector and an electrode layer disposed merely on one side of the current collector,
the electrode layer has a porosity of 30% or less, and
the single-sided electrode shows a curl of 30 mm or less.

According to the second embodiment of the present disclosure, there is provided the electrode assembly as defined in the first embodiment, wherein the mono-cell group includes one mono-cell, or two or more stacked mono-cells.

According to the third embodiment of the present disclosure, there is provided the electrode assembly as defined in the first or the second embodiment, wherein a half-cell is further interposed between the mono-cell group and the single-sided electrode.

EP 4 465 407 A1

According to the fourth embodiment of the present disclosure, there is provided the electrode assembly as defined in any one of the first to the third embodiments, a difference between the porosity of the single-sided electrode and the porosity of another electrode facing the single-sided electrode is 5% or less.

According to the fifth embodiment of the present disclosure, there is provided the electrode assembly as defined in any one of the first to the fourth embodiments, wherein the single-sided electrode includes: a current collector; and an electrode layer disposed on the current collector and containing an active material and a binder, wherein the binder is fibrilized to bind the active material.

According to the sixth embodiment of the present disclosure, there is provided the electrode assembly as defined in the fifth embodiment, wherein the electrode layer includes an active material, a conductive material and a binder.

According to the seventh embodiment of the present disclosure, there is provided the electrode assembly as defined in the fifth or the sixth embodiment, wherein the binder includes polytetrafluoroethylene (PTFE).

According to the eighth embodiment of the present disclosure, there is provided the electrode assembly as defined in the sixth or the seventh embodiment, wherein the content of the active material is 80-98 parts by weight, the content of the conductive material is 0.5-10 parts by weight, and the content of the binder is 0.5-5 parts by weight.

According to the ninth embodiment of the present disclosure, there is provided the electrode assembly as defined in any one of the fifth to the eighth embodiments, wherein the electrode current collector further includes a conductive primer layer on at least one surface thereof.

According to the tenth embodiment of the present disclosure, there is provided the electrode assembly as defined in any one of the fifth to the ninth embodiments, wherein the electrode layer is derived from a dry electrode film.

According to the eleventh embodiment of the present disclosure, there is provided the electrode assembly as defined in any one of the first to the tenth embodiments, wherein the single-sided electrode is obtained by a method including the steps of:

preparing a mixture containing an active material and a binder;
kneading the mixture at 70-200°C under a pressure equal to or higher than ambient pressure to prepare mixture lumps;
pulverizing the mixture lumps to obtain a mixed powder for an electrode;
introducing the mixed powder for an electrode between a plurality of rolls to carry out calendering, thereby forming an electrode film; and
laminating the electrode film on a current collector.

According to the twelfth embodiment of the present disclosure, there is provided the electrode assembly as defined in the eleventh embodiment, wherein the step of kneading the mixture to prepare mixture lumps is carried out in a kneader under a pressure equal to or higher than ambient pressure.

According to the thirteenth embodiment of the present disclosure, there is provided the electrode assembly as defined in the eleventh or the twelfth embodiment, wherein the electrode film has a pressing ratio of 10% or less in the step of laminating.

According to the fourteenth embodiment of the present disclosure, there is provided a secondary battery including the electrode assembly as defined in any one of the first to the thirteenth embodiments.

According to the fifteenth embodiment of the present disclosure, there is provided an energy storage system including the secondary battery as defined in the fourteenth embodiment as a unit cell.

Advantageous Effects

According to an embodiment of the present disclosure, a single-sided electrode is applied to the outermost layer of an electrode assembly, wherein the porosity of an electrode film used when manufacturing the single-sided electrode is controlled, and the pressing ratio of the electrode film is also controlled when the electrode film is laminated on a current collector so that the single-sided electrode may be provided with an electrode layer having a porosity of 30% or less. In this manner, it is possible to provide an electrode assembly having improved curling characteristics while showing maximized energy density, and a secondary battery including the same.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the electrode according to an embodiment of the present disclosure.

FIG. 2 is a schematic view illustrating calculation of the QBR value of an electrode layer.

FIG. 3a and FIG. 3b are schematic views illustrating the process for manufacturing an electrode film applied to the electrode assembly according to an embodiment of the present disclosure.

FIG. 4 is a schematic view illustrating the electrode lamination process of a double-sided electrode applied to the electrode assembly according to an embodiment of the present disclosure.

FIG. 5 is a schematic view illustrating the electrode lamination process of a single-sided electrode applied to the electrode assembly according to an embodiment of the present disclosure.

FIG. 6 is a schematic view illustrating the electrode assembly in which a double-sided electrode is disposed at the outermost layer according to the related art.

FIG. 7 is a schematic view illustrating the electrode assembly in which a single-sided electrode is disposed at the outermost layer according to an embodiment of the present disclosure.

FIG. 8 is a schematic view illustrating the electrode assembly in which a single-sided electrode is disposed at the outermost layer according to an embodiment of the present disclosure.

FIG. 9 is a photographic image illustrating the test result of the curling of the single-sided electrode according to Example 2.

FIG. 10 is a photographic image illustrating the test result of the curling of the single-sided electrode according to Comparative Example 1.

<u>BEST MODE</u>

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terminology used herein is for the purpose of describing particular embodiments only and is not intended to be limiting of the present disclosure. As used herein, the singular forms 'a', 'an' and 'the' are intended to include the plural forms as well, unless the context clearly indicates otherwise.

Throughout the specification, the expression 'a part includes an element' does not preclude the presence of any additional elements but means that the part may further include the other elements, unless otherwise stated.

In one aspect of the present disclosure, there is provided an electrode assembly including:

a mono-cell group including at least one mono-cell;
a single-sided electrode stacked on at least one side of the upper outermost side and the lower outermost side of the mono-cell group; and
a separator interposed between the mono-cell group and the single-sided electrode,
wherein the single-sided electrode includes a current collector and an electrode layer disposed merely on one side of the current collector,
the electrode layer has a porosity of 30% or less, and
the single-sided electrode shows a curl of 30 mm or less.

According to an embodiment of the present disclosure, the mono-cell group may include one mono-cell, or two or more stacked mono-cells.

Herein, the term 'mono-cell' refers to a unit assembly including a positive electrode, a negative electrode and a separator interposed between the positive electrode and the negative electrode, wherein each of the positive electrode and the negative electrode is a double-sided electrode, i.e. electrode including a current collector and electrode layers provided on both surfaces of the current collector.

According to an embodiment of the present disclosure, a half-cell may be further interposed between the mono-cell group and the single-sided electrode. Herein, the term 'half-cell' refers to a unit assembly including only one electrode selected from a positive electrode and a negative electrode, wherein the electrode of the half-cell is a double-sided electrode including electrode layers on both surfaces of a current collector.

When the mono-cell group includes two or more mono-cells, a separator may be interposed between the mono-cells adjacent to each other. In addition, when a half-cell is further interposed between the mono-cell group and the single-sided electrode, a separator may be interposed between the mono-cell group and the half-cell, and between the half-cell and the single-sided electrode.

According to an embodiment of the present disclosure, the electrode assembly may include a structure of "mono-cell group/separator/single-sided electrode' stacked successively, "mono-cell group/separator/half-cell (double-sided electrode)/separator/single-sided electrode" stacked successively, "single-sided electrode/separator/mono-cell group/-

separator/single-sided electrode" stacked successively, 'single-sided electrode/separator/mono-cell group/separator/-half-cell (double-sided electrode)/separator/single-sided electrode" stacked successively, or "single-sided electrode/separator/half-cell (double-sided electrode)/mono-cell group/separator/half-cell (double-sided electrode)/separator/single-sided electrode" stacked successively.

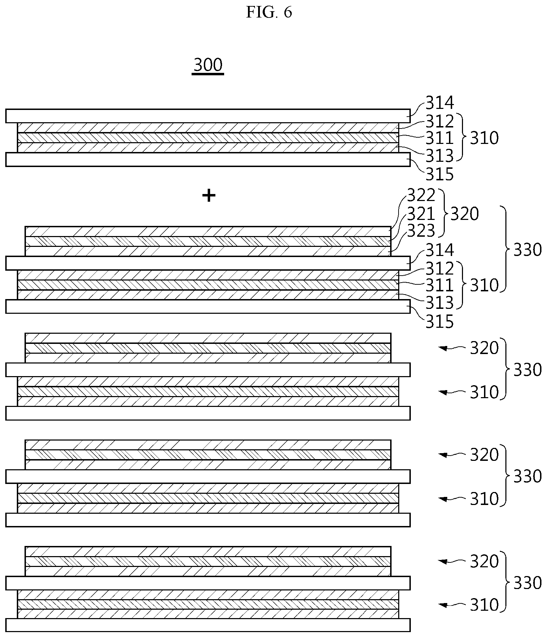

FIG. 6 is a schematic view illustrating an electrode assembly 300 in which a double-sided electrode is disposed at the outermost side according to the related art. The electrode assembly 300 includes a mono-cell group having at least one mono-cell 330 provided with a double-sided negative electrode 310 having a structure of "negative electrode layer 313/negative electrode current collector 311/negative electrode layer 312", a double-sided positive electrode 320 having a structure of "positive electrode layer 323/positive electrode current collector 321/positive electrode layer 322", a separator 314, 315 interposed between the double-sided negative electrode 310 and the double-sided positive electrode 320, and a double-sided negative electrode 310 disposed at the outermost side of the mono-cell group.

The electrode assembly 300 according to the related art is problematic in that in the electrode layers of the double-sided electrode disposed at the outermost side, the electrode layer present at the outermost side and not facing the electrode layer of another electrode cannot be utilized actually in a battery, and thus a technical need of maximizing the energy density of a secondary battery cannot be satisfied.

There has been an attempt to use a single-sided electrode at the outermost side in order to solve the above-mentioned problem. However, in the case of a single-sided electrode, there is a problem in that it causes bending to a higher degree as compared to a double-sided electrode, and defect generation is increased in a step of assemblage when a single-sided electrode causing significant bending is used.

According to the present disclosure, the porosity of an electrode film used when manufacturing the single-sided electrode is controlled, and the pressing ratio of the electrode film is also controlled when the electrode film is laminated on a current collector so that the single-sided electrode may be provided with an electrode layer having a porosity of 30% or less. In this manner, it is possible to provide an electrode assembly and a secondary battery having improved curling characteristics while showing maximized energy density.

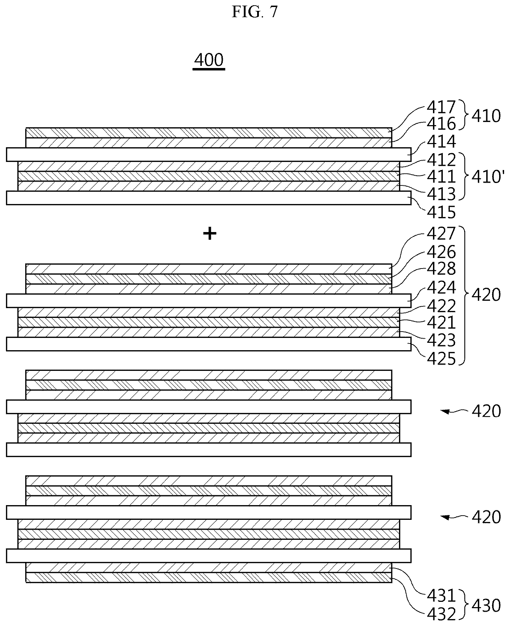

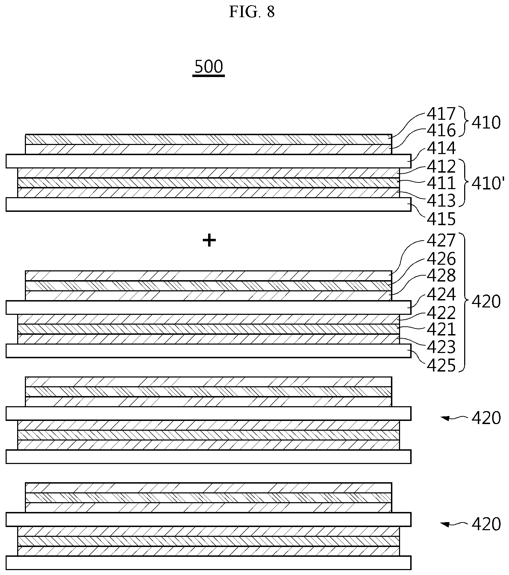

FIG. 7 and FIG. 8 illustrate schematic views illustrating an electrode assembly in which a single-sided electrode is disposed at the outermost side according to an embodiment of the present disclosure.

The electrode assembly 400 as shown in FIG. 7 includes a structure of "single-sided electrode/separator/mono-cell group/separator/half-cell (double-sided electrode)/separator /single-sided electrode" stacked successively.

Particularly, the electrode assembly 400 as shown in FIG. 7 includes a mono-cell group including at least one mono-cell 420 provided with a double-sided negative electrode having a structure of "negative electrode layer 423/negative electrode current collector 421/negative electrode layer 422", a double-sided positive electrode having a structure of "positive electrode layer 428/positive electrode current collector 426/positive electrode layer 427", and a separator 424, 425 interposed between the double-sided negative electrode and the double-sided positive electrode, and further includes a first single-sided positive electrode 410 having a structure of "positive electrode layer 416/positive electrode current collector 417" and a second single-sided positive electrode 430 having a structure of "positive electrode layer 431/positive electrode current collector 432", disposed at both of the outermost sides of the mono-cell group, wherein a double-sided negative electrode (half-cell) 410' having a structure of "negative electrode layer 413/negative electrode current collector 411/negative electrode layer 412" is further provided between the first single-sided positive electrode 410 and the mono-cell group. Herein, a separator 414, 415 is interposed between the single-sided positive electrode and the double-sided negative electrode, and between the double-sided negative electrode and the mono-cell group.

The electrode assembly 500 as shown in FIG. 8 has a structure of "mono-cell group/separator/half-cell (double-sided electrode)/separator/single-sided electrode" stacked successively.

Particularly, the electrode assembly 500 as shown in FIG. 8 includes a mono-cell group including at least one mono-cell 420 provided with a double-sided negative electrode having a structure of "negative electrode layer 423/negative electrode current collector 421/negative electrode layer 422", a double-sided positive electrode having a structure of "positive electrode layer 428/positive electrode current collector 426/positive electrode layer 427", and a separator 424, 425 interposed between the double-sided negative electrode and the double-sided positive electrode, and further includes a single-sided positive electrode 410 having a structure of "positive electrode layer 416/positive electrode current collector 417", disposed at one side of the outermost sides of the mono-cell group, wherein a double-sided negative electrode 410' having a structure of "negative electrode layer 413/negative electrode current collector 411/negative electrode layer 412" is further provided between the single-sided positive electrode and the mono-cell group. Herein, a separator 414, 415 is interposed between the single-sided positive electrode and the double-sided negative electrode, and between the double-sided negative electrode and the mono-cell group.

According to an embodiment of the present disclosure, the single-sided electrode includes: a current collector; and an electrode layer disposed on the current collector and containing an active material and a binder, wherein the binder is fibrilized to bind the active material.

The single-sided electrode may be a positive electrode or a negative electrode, and the active material may be a positive electrode active material or a negative electrode active material.

For example, the positive electrode active material includes, but are not limited to: lithium transition metal oxides; lithium metal iron phosphates, lithium nickel-manganese-cobalt oxides; lithium nickel-manganese-cobalt oxides partially substituted with other transition metals; or two or more of them. Particular examples of the positive electrode active material may include, but are not limited to: layered compounds, such as lithium cobalt oxide ($LiCoO_2$) and lithium nickel oxide ($LiNiO_2$), or those compounds substituted with one or more transition metals; lithium manganese oxides, such as $Li_{1+x}Mn_{2-x}O_4$ (wherein x is 0-0.33), $LiMnO_3$, $LiMn_2O_3$ and $LiMnO_2$; lithium coper oxide ($Li_2CuO_2$); vanadium oxides, such as $LiVsOs$, $LiV_3O_4$, $V_2O_5$ or $Cu_2V_2O_7$; Ni site-type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); lithium metal phosphates $LiMPO_4$ (wherein M is Fe, CO, Ni or Mn); lithium nickel-manganese-cobalt oxides $Li_{1+x}(Ni_aCo_bMn_c)_{1-x}O_2$ (x is 0-0.03, a is 0.3-0.95, b is 0.01-0.35, c is 0.01-0.5, a + b + c = 1); lithium nickel-manganese-cobalt oxides partially substituted with aluminum (lithium-nickel-manganese-cobalt-aluminum oxide) $Li_a[Ni_bCo_cMn_dAl_e]_{1-f}M^1_fO_2$ (wherein $M^1$ is at least one selected from the group consisting of Zr, B, W, Mg, Ce, Hf, Ta, La, Ti, Sr, Ba, F, P and S, $0.8 \le a \le 1.2$, $0.5 \le b \le 0.99$, $0 < c < 0.5$, $0 < d < 0.5$, $0.01 \le e \le 0.1$, and $0 \le f \le 0.1$); disulfide compounds; $Fe_2(MoO_4)_3$; or the like.

Non-limiting examples of the negative electrode active material include: carbon, such as non-graphitizable carbon or graphite-based carbon; metal composite oxides, such as $Li_xFe_2O_3$ ($0 \le x \le 1$), $Li_xWO_2$ ($0 \le x \le 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \le 1$; $1 \le y \le 3$; $1 \le z \le 8$); lithium metal; lithium alloy; silicon-based alloy; tin-based alloy; silicon-based oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; and conductive polymers, such as polyacetylene; Li-Co-Ni-based materials, or the like.

According to an embodiment of the present disclosure, the single-sided electrode may be a positive electrode. Therefore, particularly, the active material may be a positive electrode active material. More particularly, the positive electrode active material may include lithium transition metal oxide, lithium nickel-manganese-cobalt oxide, lithium nickel-manganese-cobalt oxide partially substituted with Al or another transition oxide, lithium iron phosphate, or the like.

According to an embodiment of the present disclosure, the electrode layer may further include a conductive material. Therefore, the electrode layer may include an active material, a conductive material and a binder.

The conductive material is not particularly limited, as long as it has conductivity while not causing any chemical change in the corresponding battery. Particular examples of the conductive material include: graphite, such as natural graphite or artificial graphite; carbonaceous materials, such as carbon black, acetylene black, ketjen black, channel black, furnace black, lamp black, thermal black or carbon fibers; metal powder or metal fibers, such as copper, nickel, aluminum or silver; needle-like or branch-like conductive whisker, such as zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker or alumina whisker; conductive metal oxide, such as titanium dioxide; conductive polymer such as a polyphenylene derivative; or the like. Such conductive materials may be used alone or in combination. Particularly, the conductive material may include at least one selected from the group consisting of activated carbon, graphite, carbon black and carbon nanotubes, and more particularly, activated carbon, with a view to homogeneous mixing of the conductive material and improvement of conductivity.

The binder may include a fluorine-containing binder, a fluorine-free binder, or two or more of them. The fluorine-containing binder may include a fluorine-containing polymer, and particular examples thereof include polytetrafluoroethylene (PTFE), polyvinylidene fluoride (PVDF), PVDF-based copolymer, such as polyvinylidene fluoride-co-hexafluoropropylene (PVDF-HFP), or two or more of them. Particularly, the fluorine-containing binder may include polytetrafluoroethylene (PTFE). In addition, the fluorine-containing binder may include polytetrafluoroethylene alone, or may further include at least one selected from polyvinylidene fluoride (PVDF) and PVDF-based copolymer, such as polyvinylidene fluoride-co-hexafluoropropylene (PVDF-HFP), besides polytetrafluoroethylene. The fluorine-free binder may include polyolefin, polyethylene oxide (PEO), or the like.

According to an embodiment of the present disclosure, the binder is fibrilized to bind the active material. When the electrode layer further includes a conductive material, the binder may be fibrilized and bind the active material and the conductive material.

The electrode may include a fibrilized binder as a means for binding the active material, or for binding the active material with the conductive material, and such a fibrilized binder shows less cutting as compared to the conventional non-fibrilized binders, has excellent elongation property in the longitudinal direction, and thus can improve the flexibility of the electrode layer and the electrode including the same. The fibrilization process of the binder will be explained in more detail in the part of a method for manufacturing an electrode as described hereinafter.

According to an embodiment of the present disclosure, the content of the active material may be 85-98 parts by weight, the content of the conductive material may be 0.5-5 parts by weight, and the content of the binder may be 0.5-10 parts by weight.

In addition, the content of the active material may be 90-98 parts by weight, the content of the conductive material may be 0.5-5 parts by weight, and the content of the binder may be 0.5-5 parts by weight.

When the content of the active material, that of the conductive material and that of the binder satisfy the above-defined ranges, the binder may be sufficiently fibrilized in the subsequent kneading step to form mixture lumps, an electrode film may be obtained with ease through the molding of the mixed powder formed through a pulverization step, the physical properties of the electrode film may be ensured, the content of the active material may be ensured to prevent the problem of a decrease in capacity, and sufficient conductivity may be ensured.

Meanwhile, a filler as an ingredient for inhibiting electrode swelling may be further introduced optionally to the electrode layer. The filler is not particularly limited, as long as it is a fibrous material, while not causing any chemical change in the corresponding battery. Particular examples of the filler include: olefinic polymers, such as polyethylene or polypropylene; fibrous materials, such as glass fibers or carbon fibers; or the like.

The current collector is not particularly limited, as long as it has high conductivity, while not causing any chemical change in the corresponding battery. Particular examples of the current collector include stainless steel, aluminum, nickel, titanium, baked carbon, copper, aluminum or stainless steel surface-treated with carbon, nickel, titanium, silver, or the like. In addition, fine surface irregularities may be formed on the surface of the current collector to enhance the binding force with the positive electrode active material. The current collector may be used in various shapes, including a film, a sheet, a foil, a net, a porous body, a foamed body, a non-woven web, or the like.

Further, the current collector may be totally or partially coated with a conductive primer layer in order to reduce the resistance at the surface and to improve the adhesion. Herein, the conductive primer layer may include a conductive material and a binder for a primer layer. The conductive material is not particularly limited, as long as it has conductivity. For example, the conductive material may include a carbonaceous material, metallic material (metal powder or metal fibers), conductive whisker, conductive metal oxide, conductive polymer, or the like. The carbonaceous material may include natural graphite, artificial graphite, graphene, carbon black, denka black, acetylene black, ketjen black, Super-P, channel black, furnace black, lamp black, thermal black, carbon nanotubes, graphite nanofibers, carbon nanofibers, or the like. The metallic material may include copper, nickel, aluminum, silver, or the like, the conductive whisker may include zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker, alumina whisker, or the like, the conductive metal oxide may include titanium dioxide, or the like, and the conductive polymer may include a polyphenylene derivative, or the like. Such materials may be used alone or in combination.

The binder for a primer layer may be a fluorine-based binder (including PVDF and PVDF copolymer) or acrylic binder that can be dissolved in a solvent, and may include an aqueous binder, such as styrene butadiene rubber (SBR).

The single-sided electrode includes a current collector and an electrode layer disposed on only one surface of the current collector, wherein the electrode layer has a porosity of 30% or less. According to an embodiment of the present disclosure, the electrode layer of the single-sided electrode may have a porosity of 20-30%, 22-30%, 23-30%, 25-30%, 26-30%, 26-29.4%, 26-28.8%, 26-27%, 27-30%, 27-29.4%, or 27-28.8%.

When the porosity satisfies the above-defined range, it is possible to facilitate wetting with an electrolyte, resulting in improvement of life characteristics, output characteristics, or the like. In addition, energy density based on volume can be improved, since the volume required to realize the same capacity is not increased.

The porosity may be obtained by subtracting the volume and weight of the current collector from the volume and weight of the electrode to determine the apparent density of the mixture film alone and by using the true density calculated based on the true density of each ingredient and composition, according to the following Formula:

$$\text{Porosity (\%)} = \{1 - (\text{Apparent density/True density})\} \times 100$$

According to an embodiment of the present disclosure, the difference between the porosity of the single-sided electrode and the porosity of another electrode facing the single-sided electrode may be 5% or less, 1-5%, or 2-5%.

Herein, when the electrode assembly includes a mono-cell group, a single-sided electrode and a separator interposed between the mono-cell group and the single-sided electrode, the term 'another electrode facing the single-sided electrode' may refer to the outermost electrode of the mono-cell group facing the single-sided electrode with the separator interposed therebetween.

In addition, when the electrode assembly includes a mono-cell group, a single-sided electrode, a half-cell (double-sided electrode) interposed between the mono-cell group and the single-sided electrode, and a separator interposed between the mono-cell group and the single-sided electrode and between the single-sided electrode and the half-cell, the term 'another electrode facing the single-sided electrode' may refer to the electrode of the half-cell (double-sided electrode) facing the single-sided electrode with the separator interposed therebetween.

When the difference between the porosity of the electrode layer of the single-sided electrode and the porosity of the electrode layer of another electrode facing the single-sided electrode is controlled to 5% or less, a smaller difference between the porosity of the single-sided electrode and the porosity of another electrode (i.e. double-sided electrode) facing the single-sided electrode is favorable in terms of the capacity and performance. However, in the case of a single-sided electrode generally having curling characteristics considering processability, the porosity may be controlled to a level about 5% higher than the porosity of a double-sided electrode. For this purpose, according to an embodiment of the present disclosure, the single-sided electrode disposed at the outermost side of the electrode assembly may have a porosity similar to that of the double-sided electrode as much as possible, i.e. may have a difference in porosity of 5% or less.

The single-sided electrode may have a curl of 30 mm or less. According to an embodiment of the present disclosure, the single-sided electrode may have a curl of 0 mm or more, 1 mm or more, 2 mm or more, 5 mm or more, 8 mm or more, 30 mm or less, 20 mm or less, 18 mm or less, or 8 mm or less, and particularly, 0-30 mm, 1-30 mm, 2-20 mm, 5-18 mm, 5-8 mm, 8-18 mm, 0-18mm, 0-8mm, or 0-5mm. When the single-sided electrode satisfies a curl within the above-defined range of 30 mm or less, no bending occurs even when the single-sided electrode is disposed at the outermost side of the electrode assembly. Therefore, it is possible to realize an advantageous effect of preventing defect generation in an assemblage step, or the like. Meanwhile, when the single-sided electrode has a curl exceeding 30 mm, the non-coated portion (a zone of current collector having no electrode layer) may roll in in the step of assembling an electrode assembly, or tearing may occur at the boundary surface between the non-coated portion and the coated portion (a zone of current collector having an electrode layer) to cause a high possibility of electrode breaking.

The curl of the single-sided electrode may be defined by disposing the single-sided electrode on a base surface in such a manner that the electrode layer of the single-sided electrode faces the flat base surface, and measuring a height lifted from the base surface in the unit of mm at both edges of the single-sided electrode by using a ruler, wherein the curl of the single-sided electrode may be defined as a height of the largest value.

According to an embodiment of the present disclosure, the binder in the electrode layer may have a crystallization degree of 10% or less.

According to the present disclosure, the crystallization degree (Xc) of the binder may be determined by using differential scanning calorimetry (DSC) based on the temperature (peak temperature) at the point where the highest enthalpy appears during the crystallization. Particularly, the crystallization degree is calculated by dividing the enthalpy of melting ($\beta$ value) measured actually through DSC by the enthalpy of melting ($\beta$ heat of melting at equilibrium) of theoretically perfect crystals (crystallization degree 100%) and expressed in the unit of %, and may be calculated according to the following Formula 1. Herein, the enthalpy of melting of theoretically perfect crystals may refer to Polymer Handbook in the case of a known polymer, and the enthalpy of melting of theoretically perfect crystals in the case of an unknown material or newly synthesized material may be calculated by the extrapolation method of extending crystallization degrees of two or more points.

[Formula 1]

$$Xc\ (\%) = (\beta_m/\beta_m°) \times 100$$

According to an embodiment of the present disclosure, the binder includes a fluorine-containing binder, and the electrode layer may have a QBR (Quantified Binder Ratio) of 1.1 or less.

Herein, QBR is defined by the following formula:

$$QBR = Bs/Bf,$$

wherein Bs represents the average value of fluorine content in the surface region of the electrode layer ranging from the outermost surface of the electrode layer to up to 15% of the total thickness of the electrode layer, and Bf represents the average value of fluorine content of the bottom region of the electrode layer ranging from the electrode layer interface facing the current collector to up to 15% of the total thickness of the electrode layer.

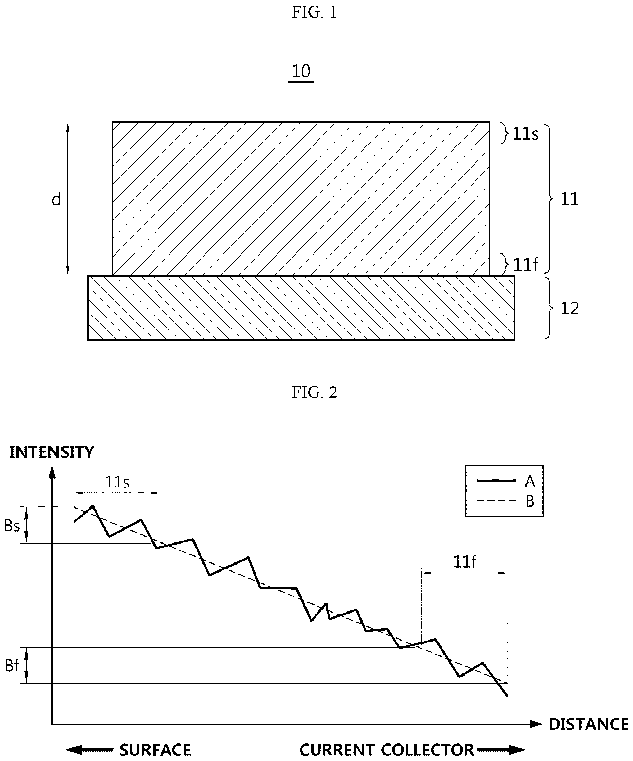

FIG. 1 is a schematic view illustrating the electrode according to an embodiment of the present disclosure. Referring to FIG. 1, the electrode 10 includes: an electrode current collector 12; and an electrode layer 11 positioned on the electrode current collector 12, and including an electrode active material and a binder. Herein, the electrode layer may optionally further include a conductive material as mentioned above.

The electrode layer 11 has, based on its total thickness d, an electrode layer surface region 11s ranging from the outermost surface of the electrode layer to up to 15% of the total thickness d of the electrode layer, and an electrode layer bottom region 11f ranging from the electrode layer interface facing the current collector to up to 15% of the total thickness d of the electrode layer.

In the mathematical formula of QBR, Bs represents the average vale of fluorine content in the electrode layer surface region 11s, and Bf represents the average value of fluorine content in the electrode layer bottom region 11f.

Herein, QBR may be calculated by the following method.

First, an electrode, QBR of which is to be determined, is selected, and the section of the selected electrode is obtained by using argon ion milling. Next, an energy dispersive X-ray spectroscopy (EDS) detector of a scanning electronic microscopy (SEM) instrument is used to perform EDS mapping of the ingredients in the electrode layer of the electrode section.

Then, a line profile is extracted from the EDS mapping results in the electrode layer thickness direction, and the average value Bs of fluorine content of the fluorine-containing binder of the electrode layer surface region and the average value Bf of the fluorine content of the fluorine-containing binder of the electrode layer bottom region are extracted from the line profile results. After that, QBR is calculated by using the following Formula:

$$QBR = Bs/Bf$$

Herein, the electrode layer surface region is a zone ranging from the outermost surface of the electrode layer to up to 15% of the total thickness d of the electrode layer in the thickness direction of the electrode layer, and the electrode layer bottom region is a zone ranging from the electrode layer interface facing the current collector to up to 15% of the total thickness d of the electrode layer.

FIG. 2 is a schematic view illustrating calculation of the QBR value of an electrode layer. Referring to FIG. 2, X-axis represents the thickness of the electrode layer, i.e. distance from the surface toward the current collector, and Y-axis represents the intensity of fluorine ingredient. Line A represents the intensity of fluorine ingredient of the fluorine-containing binder extracted through EDS mapping of fluorine ingredient in the electrode layer of the electrode section, and line B represents a tendency line showing a tendency of line A and is plotted by the LOWESS smoothing method, i.e. through smoothing in a locally-weighted scatter plot smoother mode.

The QBR value is a value illustrating the uniformity of the distribution of the fluorine-containing binder in the thickness direction of the electrode layer by means of the ratio of the content of fluorine-containing binder contained in the surface region of the electrode layer based on the content of fluorine-containing binder contained in the bottom region of the electrode layer. Herein, the content of fluorine-containing binder may be inferred through the fluorine ingredient contained in the fluorine-containing binder.

The QBR value is 1.1 or less. According to an embodiment of the present disclosure, the QBR value may be 0.95 or more, 0.97 or more, 1.03 or less, or 1.05 or less, or 0.95-1.05.

When the QBR value satisfies the above-defined range of 1.1 or less, there is no problem of an increase in the content of fluorine-containing binder contained in the surface region of the electrode layer based on the content of fluorine-containing binder contained in the bottom region of the electrode layer, caused by the migration of the fluorine-containing binder. As a result, the binder distribution in the thickness direction of the electrode layer becomes uniform, and the content of binder at the portion near the current collector is not reduced, and thus the adhesion between the current collector and the electrode layer is improved, and the conductivity on the electrode layer surface and charge/discharge rate are also improved.

Particular examples of the fluorine-containing binder include polytetrafluoroethylene (PTFE), polyvinylidene fluoride (PVDF), PVDF-based copolymer, such as polyvinylidene fluoride-co-hexafluoropropylene (PVDF-HFP), or two or more of them. In addition, the fluorine-containing binder may include polytetrafluoroethylene alone, or polytetrafluoroethylene in combination with at least one selected from polyvinylidene fluoride (PVDF) and PVDF-based copolymer, such as polyvinylidene fluoride-co-hexafluoropropylene (PVDF-HFP).

The electrode layer may be derived from a film for a dry electrode. Herein, the film for a dry electrode refers to a film obtained through a dry manufacturing process using no dispersion medium, unlike a conventional wet electrode manufacturing process including preparing a slurry by dissolving and/or dispersing an active material and a binder (optionally further including a conductive material) in a dispersion medium, such as water or an organic solvent and applying the slurry onto a current collector, followed by drying. The obtained electrode film is laminated on a current collector subsequently to provide a finished electrode. The methods for manufacturing the electrode film and the electrode will be explained in more detail hereinafter.

According to an embodiment of the present disclosure, the single-sided electrode may be obtained by a method including the steps of:

preparing a mixture containing an active material and a binder;
kneading the mixture at 70-200°C under a pressure equal to or higher than ambient pressure to prepare mixture lumps;
pulverizing the mixture lumps to obtain a mixed powder for an electrode;
introducing the mixed powder for an electrode between a plurality of rolls to carry out calendering, thereby forming an electrode film; and

laminating the electrode film on a current collector.

Hereinafter, the method for manufacturing a single-sided electrode applied to the electrode according to the present disclosure will be explained in more detail. According to an embodiment of the present disclosure, besides the single-sided electrode applied to the electrode assembly according to the present disclosure, the double-sided electrode contained in the mono-cell group or half-cell may also be obtained by the method as described hereinafter.

First, a mixture containing an active material and a binder is prepared. As mentioned above, the mixture may optionally further include a conductive material, and it can be said that an embodiment further including a conductive material is also described, even though the conductive material is not clearly stated in the following description.

Herein, the mixing for preparing the mixture is carried out in such a manner that the active material and the binder may be distributed homogeneously. In addition, since the mixture is mixed in the form of a powder, any mixing process capable of simple mixing of the ingredients may be used with no particular limitation, and the ingredients may be mixed through various processes. However, since the electrode according to the present disclosure is manufactured through a dry process using no dispersion medium, the mixing may be carried out through a dry mixing process, and the ingredients may be introduced to an instrument, such as a blender, to carry out the mixing.

In addition, the mixing may be carried out in a mixer at 5,000-20,000 rpm for 30 seconds to 2 minutes, particularly, at 10,000-15,000 rpm for 30 seconds to 1 minute to ensure homogeneity.

According to an embodiment of the present disclosure, a super-mixer may be used in the mixing step for preparing the mixture, and particularly, the mixing step may be carried out in a super-mixer at 1,000-2,000 rpm for 5-10 minutes

The binder is not particularly limited, as long as it is capable of fine fibrilization by the step of preparing the mixed powder. The fine fibrilization refers to treatment of finely dividing a polymer, and for example, may be carried out by using mechanical shear force, or the like. Particular examples of the binder are the same as described above.

Next, the mixture is kneaded at 70-200°C under a pressure equal to or higher than ambient pressure to prepare mixture lumps.

According to the related art, high-shear mixing, such as jet milling, was carried out to fibrilize a binder. However, in this case, there is a problem in that an active material is micronized by the mixing and the resultant fibers may be cut. According to the present disclosure, the problem is solved by using a low-shear kneading process instead of high-shear mixing.

The kneading is not limited to a particular process. According to an embodiment of the present disclosure, the kneading may be carried out through a kneader, or the like.

The kneading step is a step of binding or connecting the active material and the conductive material, while the binder is fibrilized, thereby forming mixture lumps having a solid content of 100%.

Particularly, the kneading may be controlled to a kneading rate of 10-100 rpm. For example, the kneading rate may be controlled to 20-70 rpm within the above-defined range. The kneading may be carried out for 1-30 minutes. For example, the kneading may be carried out at a rate of 20-50 rpm for 3-10 minutes within the above-defined ranges. Meanwhile, the kneading may be controlled to a shear rate of 10/s to 500/s. According to an embodiment of the present disclosure, the kneading may be carried out for 1-30 minutes, and the shear rate may be controlled to 30/s to 100/s.

Meanwhile, the kneading step may be carried out at high temperature under a pressure condition of ambient pressure or higher, particularly, a pressure condition higher than ambient pressure.

More particularly, the kneading of the mixture may be carried out at 70-200°C, specifically 90-180°C.

When the kneading is carried out at a low temperature beyond the above-defined temperature range, it is not possible to perform the fibrilization of the binder during the kneading and the lump formation through kneading sufficiently. As a result, it is not possible to form a film with ease during calendering. On the other hand, when the kneading is carried out at an excessively high temperature, the binder may be fibrilized rapidly, and the resultant fibers may be cut by excessive shear force, undesirably.

In addition, the kneading may be carried out under a pressure equal to or higher than ambient pressure, or under a pressure of 1-60 atm, 1-30 atm, 1-10 atm, 1-8 atm, 1.1-7 atm, or 1.1-6 atm.

When the above-defined pressure range is satisfied, it is possible to prevent the problems of cutting of the resultant fibers, caused by the application of excessive shear force and pressure, and an excessive increase in the density of the mixture lumps. In other words, according to the present disclosure, it is possible to accomplish desired effects, when a low-shear mixing step is carried out at high temperature under a pressure condition equal to or higher than ambient pressure, instead of high-shear mixing.

Then, the mixture lumps are pulverized to obtain a mixed powder for an electrode.

Particularly, the mixture lumps prepared through the kneading may be directly subjected to calendering. However, in this case, it is required to press the mixture lumps to convert them into a thin film, and thus there is a problem in that uniform films cannot be obtained. Therefore, according to the present disclosure, the mixture lumps are subjected to a pulverization step. When the mixed powder for an electrode obtained through the pulverization is excessively coarse or aggregated, bridges are formed in a calendering step to cause generation of defects, such as pinholes, in film appearance, or to produce a film having non-uniform surface properties. Therefore, a mixed powder for an electrode having a uniform size through the pulverization is obtained, and then calendering is carried out.

Herein, the pulverization step may be carried out by using a known pulverizing instrument, such as a blender or a grinder, but is not limited thereto. Particularly, the pulverization step may be carried out at a rate of 5,000-20,000 rpm for 30 seconds to 10 minutes, more particularly, at a rate of 10,000-18,000 rpm for 30 seconds to 2 minutes.

When the above-defined pulverization rate and time are satisfied, it is possible to carry out pulverization sufficiently, and thus to form a powder having a size suitable for filming and to prevent the problem of generation of a large amount of fine powder from the mixture limps. If necessary, a classification step for screening a powder having a size smaller or larger than a predetermined size may be carried out.

According to an embodiment of the present disclosure, a cutter mill, a fine mill, or the like, may be used in the pulverization step. Herein, the cutter mill may be used at 400-500 rpm for several seconds to pulverize the mixture lumps prepared through the kneading coarsely to a level of several millimeters. In addition, the fine mill may be used to pulverize the coarsely pulverized powder uniformly to a predetermined size or less and may be operated at 3,000-8,000 rpm.

After that, the mixed powder for an electrode is introduced between a plurality of rolls to carry out calendering, thereby forming an electrode film.

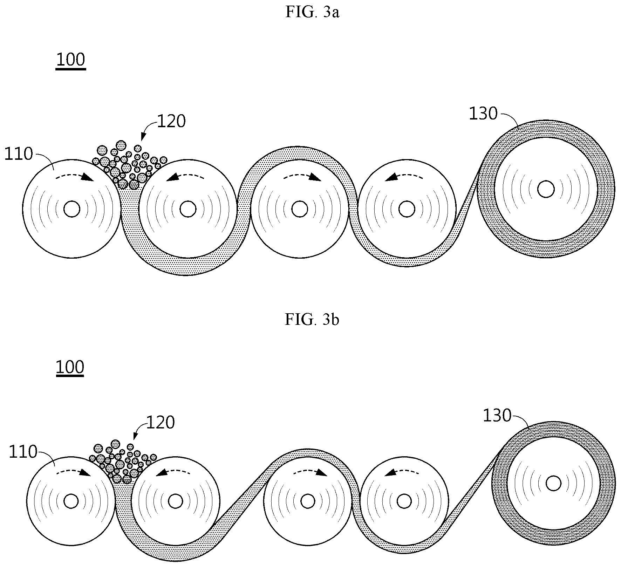

Referring to FIG. 3a and FIG. 3b, step 100 of forming an electrode film is illustrated, wherein a plurality of rolls 110 is disposed while being spaced apart from each other. The mixed powder 120 for an electrode obtained from the preceding step is introduced between the adjacent rolls 110, and the rolls 110 are rotated in the opposite direction. In this manner, the mixed powder 120 is pressed, and then is subjected to a powder sheeting step so that it may be molded into a sheet or a film. Then, calendering is carried out many times to obtain an electrode film having a final target thickness.

According to an embodiment of the present disclosure, the interval between the rolls may be controlled suitably considering the dimension or physical properties of an electrode film to be obtained in the step of forming an electrode film. For example, in FIG. 3b, the interval between the second roll and the third roll and the interval between the fourth roll and the fifth roll may be controlled to a larger value, as compared to FIG. 3a.

Particularly, the calendering includes processing the mixed powder for an electrode into the shape of a film. For example, the mixed powder for an electrode may be molded into a film having an average thickness of 50-300 $\mu$m.

For example, the calendering may be carried out by using rolls facing each other. According to an embodiment of the present disclosure, the calendering may be carried out repeatedly at least once, for example, once to five times, three or four time, or four times repeatedly.

Herein, the roll temperature may be 50-200°C.

The roll rotation speed ratio may be controlled suitably depending on the roll size, calendering number, electrode film thickness, or the like. For example, the rotation speed ratio may be controlled to a range of 1-10 times, 1-8 times, 1-7 times, or 1.2-5 times.

In addition, the gap between a pair of rolls facing each other may be controlled variably depending on the thickness and density of a film to be obtained.

Particularly, when the gap between the rolls facing each other is reduced, the pressure is increased. On the other hand, when the gap is increased, the pressure is reduced. The gap between the rolls facing each other may be varied with the thickness of a film, tolerance of equipment, or the like, and thus it is more suitable that the gap is expressed as force applied to a predetermined length or area, or the like.

According to an embodiment of the present disclosure, the force applied to the rolls facing each other may be 100-500 kgf, 150-450 kgf, 170-300 kgf, 170-250 kgf, or 180-230 kgf, per centimeter of the roll width.

After the calendering step is finished, a dry electrode film functioning as an electrode mixture may be obtained. The dry electrode film may also be called a free-sanding film according to the related art.

The resultant dry electrode film includes no solvent and has little flowability, and thus can be handled with ease and processed into a desired shape to be used for manufacturing electrodes with various shapes. In addition, when using the dry electrode film according to the present disclosure for manufacturing an electrode, a drying step for removing a solvent can be eliminated, and thus the production processability of the electrode can be improved significantly, and the problems of the methods for manufacturing a dry electrode according to the related art, such as the brittleness of an active material or cutting of a fibrilized binder, can be solved.

Meanwhile, according to an embodiment of the present disclosure, the dry electrode film may have a porosity of 20-35%, or 20-33%. To press an electrode film having a porosity of larger than 35% to a finished single-sided electrode or double-sided electrode including an electrode layer having a porosity of 30% or less through the lamination step, a high level of pressure is required. Therefore, in the pressing step, it is likely that defects are generated, for example, curls are generated the case of a single-sided electrode, and the non-coated portion is wrinkled or picked up in the case of a double-sided electrode. According to an embodiment of the present disclosure, when the electrode film satisfies a range of porosity of 20-35%, it is possible to solve the above-mentioned problem. According to an embodiment of the present disclosure, the porosity may be obtained by determining the apparent density of the electrode film and by using the true density calculated based on the true density of each ingredient and composition, according to the following Formula:

$$Porosity\ (\%) = \{1 - (Apparent\ density/True\ density)\} \times 100$$

After that, the electrode film is laminated on a metallic current collector.

The lamination step may be a step of pressing and adhering the electrode film obtained from the preceding step onto a current collector to a desired thickness. The lamination may also be carried out by using a lamination roll, wherein the lamination roll may be maintained at a temperature of 25-250°C.

According to an embodiment of the present disclosure, the electrode film may have a compression ratio of 30-50%, 35-50%, or 40-50%.

The compression ratio of the electrode film may be defined as the ratio of the compressed thickness of the electrode film at the moment of lamination, and may be represented by the following Formula 1:

[Formula 1]

$$Compression\ ratio\ (\%) = T_p/T_1 \times 100$$

wherein $T_p$ represents the pressurized thickness of an electrode film in the lamination step, and $T_1$ represents the thickness of the electrode film before the lamination step.

According to the present disclosure, the lamination step may be controlled to satisfy a specific compression ratio. In this manner, it is possible to provide the electrode film with adequate density and porosity, and to realize excellent adhesion between the electrode film and the current collector.

When the electrode film satisfies a compression ratio of 30-50%, the pressure applied to the electrode film is sufficient so that the adhesion between the electrode film and the current collector may be improved. In addition, it is possible to prevent the problem of detachment of the electrode film from the current collector after the lamination step, and to solve the problem of an undesired increase in density of the electrode film, a decrease in porosity of the electrode film as compared to a target porosity, or damages to the current collector.

According to an embodiment of the present disclosure, when the electrode film is laminated onto both surfaces of the current collector, the compression ratio (%) of Formula 1 may be expressed by the following Formula 2:

[Formula 2]

$$30 \leq (T_1 + 0.5T_c - 0.5T_{gap})/T_1 \times 100 \leq 50$$

wherein $T_1$ represents the thickness of an electrode film before the lamination step, $T_c$ represents the thickness of a current collector, and $T_{gap}$ represents an interval between a first pressing roll and a second pressing roll.

In addition, when manufacturing a double-sided electrode, the electrode film subjected to the lamination step may have a pressing ratio of 20% or less, 18% or less, 15% or less, 5-15%, 6-15%, 7-15%, or 9-13%.

When manufacturing a single-sided electrode according to an embodiment of the present disclosure, the electrode film subjected to the lamination step may have a pressing ratio of 10% or less, 3-10%, 3.5-10%, 3.7-7.1%, 3.7-4.9%, or 4.9-7.1%.

Herein, the pressing ratio may be defined as a ratio of the thickness of an electrode film after the lamination step based on the thickness of the electrode film before the lamination step, and may be represented by the following Formula 3:

[Formula 3]

$$Pressing\ ratio\ (\%) = (T_1-T_2)/T_1 \times 100$$

wherein $T_1$ represents the thickness of an electrode film before the lamination step, and $T_2$ represents the thickness of the electrode film after the lamination step.

When the pressing ratio satisfies the above-defined range, it is possible to provide the resultant electrode film with adequate density and porosity, and to realize excellent adhesion between the electrode film and the current collector.

Before and after the lamination of the electrode film with the current collector, an increase in apparent density may be represented by the following Formula 4:

[Formula 4]

Increase in apparent density (%) = $(D_2-D_1)/D_1 \times 100$

wherein $D_1$ represents the apparent density (g/cm$^3$) of an electrode film before the lamination step, and $D_2$ represents the apparent density (g/cm$^3$) of the electrode film after the lamination step.

The electrode film may have an increase in apparent density of 5-30%, 7-25%, or 10-20%, before and after its lamination with the current collector.

Each of $D_1$ and $D_2$ that represents the apparent density of the electrode film may vary with the type of active material. According to an embodiment of the present disclosure, when the active material is lithium nickel-manganese-cobalt oxides $Li_{1+x}(Ni_aCo_bMn_c)_{1-x}O_2$ (x is 0-0.03, a is 0.3-0.95, b is 0.01-0.35, c is 0.01-0.5, a + b + c = 1), lithium nickel-manganese-cobalt oxides partially substituted with aluminum (lithium-nickel-manganese-cobalt-aluminum oxide) $Li_a[Ni_bCo_cMn_dAl_e]_{1-f}M^1_fO_2$ (wherein $M^1$ is at least one selected from the group consisting of Zr, B, W, Mg, Ce, Hf, Ta, La, Ti, Sr, Ba, F, P and S, $0.8 \leq a \leq 1.2$, $0.5 \leq b \leq 0.99$, $0 < c < 0.5$, $0 < d < 0.5$, $0.01 \leq e \leq 0.1$, and $0 \leq f \leq 0.1$), or the like, each of $D_1$ and $D_2$ may range from 2.75 g/cm$^3$ to 3.5 g/cm$^3$.

Meanwhile, when the electrode film satisfies the above-defined range of an increase in apparent density, it is possible to improve the adhesion between the electrode film and the current collector and to prevent the problem of a porosity beyond the target range or damages to the active material or current collector.

Such an apparent density before and after the lamination of the electrode film with the current collector may be calculated by measuring the weight and thickness of the electrode film before lamination, measuring the weight and thickness of the electrode after lamination, and calculating the weight and thickness of the film from which the weight and thickness of the current collector are subtracted.

In addition, the electrode film may have an active material loading amount of 3-15 mAh/cm$^2$, particularly 4-10 mAh/cm$^2$.

Herein, the active material loading amount is a value calculated according to the following Formula 5:

[Formula 5]

Active material loading amount (mAh/cm$^2$) = Capacity (mAh/g) of active material

x Weight ratio (wt%) of active material in dry electrode film x Weight per unit area (g/cm$^2$)

of dry electrode film

In addition, the interfacial resistance between the electrode film and the current collector may be 5 $\Omega \cdot$cm$^2$ or less, particularly 2 $\Omega \cdot$cm$^2$ or less. Herein, the interfacial resistance may be calculated by determining the resistance value between the dry electrode film and the current collector layer as a potential difference measured among multiple probes, after applying an electric current of 100 $\mu$A to the electrode through the multiprobe (MP) resistance test method. When the interfacial resistance satisfies the above-defined range, the secondary battery obtained subsequently may be provided with improved performance.

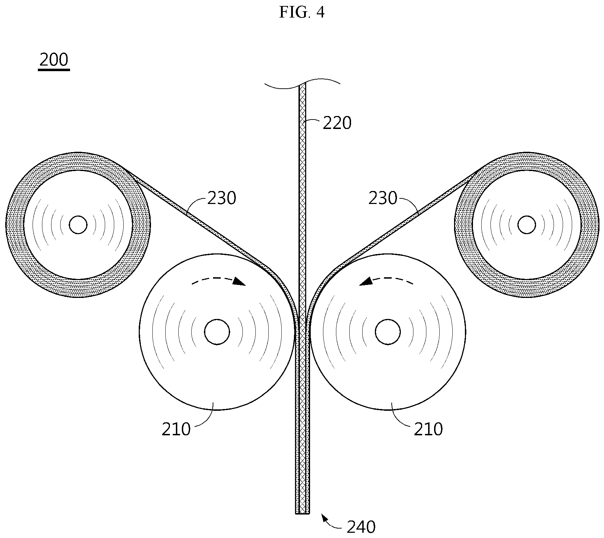

FIG. 4 is a schematic view illustrating the step of laminating an electrode film on both surfaces of a current collector in the double-sided electrode applied to the electrode assembly according to an embodiment of the present disclosure. In other words, in lamination step 200, the electrode film 230 obtained from the preceding step may be pressed on and attached to a current collector 220 to a desired thickness by using a pair of lamination rolls 210, thereby providing a finished electrode 240.

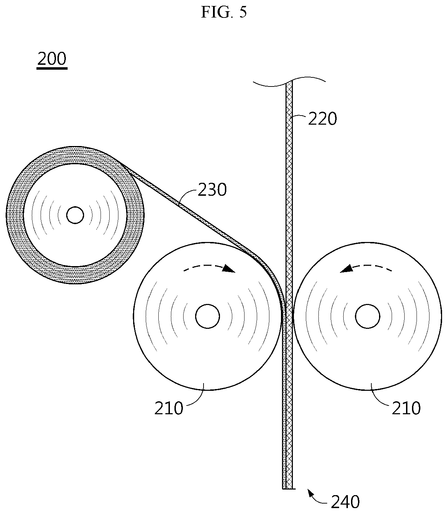

FIG. 5 is a schematic view illustrating the step of laminating an electrode film on one surface of a current collector in the single-sided electrode applied to the electrode assembly according to an embodiment of the present disclosure. In other words, in lamination step 200, the electrode film 230 obtained from the preceding step may be pressed on and attached to a current collector 220 to a desired thickness by using a pair of lamination rolls 210, thereby providing a finished electrode 240.

In still another aspect of the present disclosure, there is provided a secondary battery including the electrode assembly according to an embodiment of the present disclosure, wherein the electrode assembly is received in a battery casing (cylindrical casing, prismatic casing, pouch, or the like) together with a lithium-containing nonaqueous electrolyte. There is also provided an energy storage system including the secondary battery as a unit cell.

Herein, since the particular structures of the secondary battery and the energy storage system are known to those skilled in the art, and detailed description thereof will be omitted in the present disclosure.

Meanwhile, according to an embodiment of the present disclosure, there is provided a system for carrying out the above-described method for manufacturing a single-sided electrode or double-sided electrode. The system includes: a blender configured to mix ingredients of an electrode mixture including an active material and a binder (optionally further including a conductive material); a kneader configured to knead the mixture of the ingredients to form mixture lumps; a pulverizer configured to pulverize the mixture lumps to form a mixed powder for an electrode; a calender configured to form a dry electrode film from the mixed powder for an electrode; and a lamination roll configured to dispose the dry electrode film on at least one surface of a current collector and to carry out lamination.

The blender is a mixer configured to mix the ingredients. As described above, the ingredients of the mixture may be mixed at a rate of 5,000-20,000 rpm. The mixer may include a super-mixer, or the like.

The kneader is a device for fibrilizing a binder and dispersing the ingredients of the mixture according to the present disclosure, and the mixture may be obtained in the form of mixture lumps through the kneading in the kneader. Herein, to obtain the results according to the present disclosure, the kneader may be set to a temperature of 70-200°C or 90-180°C and a pressure condition equal to or higher than ambient pressure, or a pressure of 1-60 atm, 1-30 atm, 1-10 atm, 1-8 atm, 1.1-7 atm, or 1.1-6 atm.

The pulverizer is configured to pulverize the obtained mixture lumps to form a mixed powder for an electrode, and may include a blender or a grinder. The grinder may include a cutter mill, a fine mill, or the like.

The calender is a device for molding the mixed powder for an electrode into a film shape. For example, the calender may include a pair of rollers facing each other, and the film thickness may be controlled from the interval between the rollers.

The lamination roll functions to attach the dry electrode film formed by the calender to at least one surface of the current collector and to carry out pressing.

The porosity of the dry electrode film according to the present disclosure may be determined by the calender and the lamination roll.

The system for manufacturing a dry electrode according to the present disclosure is characterized by including a kneader and a pulverizer.

The particular structures of the blender, kneader, calender and lamination roll are known to those skilled in the art, and detailed description thereof will be omitted herein.

MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

Example 1

(1) Manufacture of Single-Sided Positive Electrode

First, 960 g of lithium nickel cobalt manganese aluminum oxide (NCMA, $Li[Ni_{0.87}Co_{0.05}Mn_{0.07}Al_{0.01}]O_2$)) as a positive electrode active material, 10 g of carbon black as a conductive material and 30 g of polytetrafluoroethylene (PTFE) as a binder were introduced to a blender and mixed at 10,000 rpm for 1 minute to prepare a mixture, and the mixture was introduced to a kneader.

The temperature of the kneader was stabilized at 150°C, the mixture was introduced to the kneader, and the kneader was operated under a cover pressure of 1.1 atm at a rate of 40 rpm for 5 minutes to obtain mixture lumps. The mixture lumps were introduced to a blender, pulverized at 10,000 rpm for 30 seconds, and classified by using a sieve having pores with a size of 1 mm to obtain a mixed powder for an electrode. Then, the resultant mixed powder for an electrode was introduced to a lab calender (roll diameter: 160 mm, roll temperature: 100°C) three times to obtain an electrode film. When carrying out calendering, the gap was adjusted to provide an electrode film having a desired density (porosity).

Herein, the calendering was carried out while controlling the pressing power to obtain a dry electrode film having a desired porosity. The pressure applied by a pair of rolls facing each other was 221 kgf per centimeter during the calendering.

One sheet of the electrode film was disposed on one surface of a current collector, i.e. aluminum foil (thickness 15 $\mu$m, coated with conductive primer layers containing carbon black and a PVDF binder mixed at a weight ratio of 1:2 and having a thickness of 0.5 $\mu$m on both surfaces thereof), and lamination was carried out through a room-temperature compressing roll (lamination roll) to obtain a single-sided positive electrode.

Herein, the lamination was carried out under the conditions of a diameter of the compressing rolls facing each other of 200 Φ, a rotation speed ratio of the rolls of 1:1, and force applied by the compressing rolls of 155 kgf per centimeter.

The thickness, porosity and loading of the electrode film before the lamination step, the pressing ratio in the lamination step, and the thickness, porosity and loading of the electrode layer provided on one surface of the current collector after the lamination step are shown in the following Table 1.

(2) Manufacture of Electrode Assembly

1) Manufacture of Double-Sided Negative Electrode

First, 97.6 parts by weight of artificial graphite and natural graphite (weight ratio: 90:10) as a negative electrode active material, and 1.2 parts by weight of styrene-butadiene rubber (SBR) and 1.2 parts by weight of carboxymethyl cellulose (CMC) functioning as a binder were mixed to prepare a negative electrode mixture. The negative electrode mixture was dispersed in ion exchange water functioning as a solvent to prepare a negative electrode mixture slurry. The slurry was coated on both surfaces of copper foil having a thickness of 20 μm, followed by drying and compression, thereby providing a double-sided negative electrode.

2) Manufacture of Double-Sided Positive Electrode

A double-sided positive electrode was obtained in the same manner as the manufacture of a single-sided positive electrode, except that two sheets of the electrode films were disposed on both surfaces of the current collector in the step of manufacturing the single-sided positive electrode. Herein, the double-sided electrode had a loading amount of 5.0 mAh/cm$^2$, and the electrode layer had a porosity of 26%.

3) Manufacture of Electrode Assembly

The single-sided positive electrode, double-sided negative electrode and double-sided positive electrode obtained as described above, and a polyethylene film (thickness 9 μm) as a separator were used and stacked in the order of 'single-sided positive electrode/separator/double-sided negative electrode/separator/double-sided positive electrode/separator/double-sided negative electrode/separator/double-sided positive electrode/separator/double-sided negative electrode/separator/double-sided positive electrode/separator/double-sided negative electrode' in such a manner that the single-sided positive electrode might be disposed at the outermost side. In this manner, an electrode assembly was obtained.

Example 2

A single-sided positive electrode and an electrode assembly were obtained in the same manner as Example 1, except that the thickness, porosity and loading of the electrode film before the lamination step, the pressing ratio in the lamination step, and the thickness, porosity and loading of the electrode layer provided on one surface of the current collector after the lamination step were changed to the conditions as shown in Table 1.

Herein, the calendering was carried out while controlling the pressing power to obtain a dry electrode film having a desired porosity. The pressure applied by a pair of rolls facing each other was 170 kgf per centimeter during the calendering.

Herein, the lamination was carried out under the conditions of a diameter of the compressing rolls facing each other of 200 Φ, a rotation speed ratio of the rolls of 1:1, and force applied by the compressing rolls of 257 kgf per centimeter.

Example 3

A single-sided positive electrode and an electrode assembly were obtained in the same manner as Example 1, except that the thickness, porosity and loading of the electrode film before the lamination step, the pressing ratio in the lamination step, and the thickness, porosity and loading of the electrode layer provided on one surface of the current collector after the lamination step were changed to the conditions as shown in Table 1.

Herein, the calendering was carried out while controlling the pressing power to obtain a dry electrode film having a desired porosity. The pressure applied by a pair of rolls facing each other was 264 kgf per centimeter during the calendering.

Herein, the lamination was carried out under the conditions of a diameter of the compressing rolls facing each other of 200 Φ, a rotation speed ratio of the rolls of 1:1, and force applied by the compressing rolls of 190 kgf per centimeter.

Example 4

A single-sided positive electrode and an electrode assembly were obtained in the same manner as Example 1, except that the thickness, porosity and loading of the electrode film before the lamination step, the pressing ratio in the lamination step, and the thickness, porosity and loading of the electrode layer provided on one surface of the current collector after the lamination step were changed to the conditions as shown in Table 1.
Herein, the calendering was carried out while controlling the pressing power to obtain a dry electrode film having a desired porosity. The pressure applied by a pair of rolls facing each other was 386 kgf per centimeter during the calendering.
Herein, the lamination was carried out under the conditions of a diameter of the compressing rolls facing each other of 200 Φ, a rotation speed ratio of the rolls of 1:1, and force applied by the compressing rolls of 85 kgf per centimeter.

Comparative Example 1

A single-sided positive electrode and an electrode assembly were obtained in the same manner as Example 1, except that the thickness, porosity and loading of the electrode film before the lamination step, the pressing ratio in the lamination step, and the thickness, porosity and loading of the electrode layer provided on one surface of the current collector after the lamination step were changed to the conditions as shown in Table 1.
Herein, the calendering was carried out while controlling the pressing power to obtain a dry electrode film having a desired porosity. The pressure applied by a pair of rolls facing each other was 130 kgf per centimeter during the calendering.
Herein, the lamination was carried out under the conditions of a diameter of the compressing rolls facing each other of 200 Φ, a rotation speed ratio of the rolls of 1:1, and force applied by the compressing rolls of 575 kgf per centimeter.

Comparative Example 2

A single-sided positive electrode and an electrode assembly were obtained in the same manner as Example 1, except that the thickness, porosity and loading of the electrode film before the lamination step, the pressing ratio in the lamination step, and the thickness, porosity and loading of the electrode layer provided on one surface of the current collector after the lamination step were changed to the conditions as shown in Table 1.
Herein, the calendering was carried out while controlling the pressing power to obtain a dry electrode film having a desired porosity. The pressure applied by a pair of rolls facing each other was 112 kgf per centimeter during the calendering.
Herein, the lamination was carried out under the conditions of a diameter of the compressing rolls facing each other of 200 Φ, a rotation speed ratio of the rolls of 1:1, and force applied by the compressing rolls of 210 kgf per centimeter.

Evaluation of Performance

The single-sided electrode (positive electrode) forming the electrode assembly according to each of Examples 1-4 and Comparative Examples 1 and 2 was evaluated as follows. The results are shown in Table 1.

(1) Thickness

The thickness was measured by using a thickness gauge (VL-50S-B available from Mitutoyo).

(2) Loading Amount

The loading amount was calculated according to the following formula:

$$\text{Loading amount (mAh/cm}^2) = [\text{Capacity (mAh/g) of active material}] \times [\text{Weight ratio (wt\%) of active material in electrode film}] \times [\text{Weight per unit area (g/cm}^2) \text{ of electrode film}]$$

(3) Porosity

The porosity of the electrode was obtained by subtracting the volume and weight of the current collector from the volume and weight of the electrode to determine the apparent density of the electrode layer alone and by using the true density calculated based on the true density of each ingredient and composition, according to the following Formula:

$$\text{Porosity (\%)} = \{1 - (\text{Apparent density/True density})\} \times 100$$

(4) Curl of Single-Sided Electrode

The curl of the single-sided electrode was defined by disposing the single-sided electrode on a base surface in such a manner that the electrode layer of the single-sided electrode might face the flat base surface, and measuring a height lifted from the base surface in the unit of mm at both edges of the single-sided electrode by using a ruler, wherein the curl of the single-sided electrode was defined as a height of the largest value.

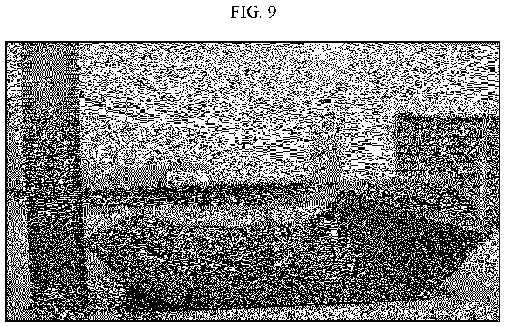

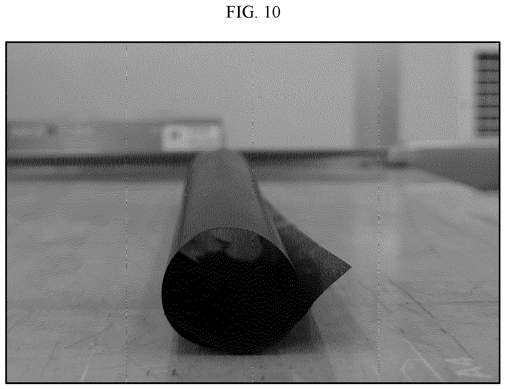

FIG. 9 is a photographic image illustrating the result of determining the curl of the single-sided electrode according to Example 2, and FIG. 10 is a photographic image illustrating the result of determining the curl of the single-sided electrode according to Comparative Example 1.

[Table 1]

| | Before lamination step | | | After lamination step | | | | Curl of single-sided electrode (mm) |
|---|---|---|---|---|---|---|---|---|
| | Thickness ($\mu$m) | Porosity (%) | Loading amount (mAh/cm$^2$) | Thickness ($\mu$m) | Pressing ratio (%) | Porosity (%) | Loading amount (mAh/cm$^2$) | |
| Ex. 1 | 82 | 30.9 | 5.11 | 79 | 3.7 | 28.8 | 5.08 | 5 |
| Ex. 2 | 85 | 33.7 | 5.09 | 79 | 7.1 | 29.4 | 5.03 | 18 |
| Ex. 3 | 81 | 30.1 | 5.11 | 77 | 4.9 | 27.0 | 5.07 | 8 |
| Ex. 4 | 76 | 26.1 | 5.07 | 75.8 | 0.3 | 26.0 | 5.06 | 0 |
| Comp. Ex. 1 | 90 | 36.9 | 5.13 | 78 | 13.3 | 28.7 | 5.01 | NG |
| Comp. Ex. 2 | 90 | 37.2 | 5.10 | 85 | 5.6 | 34.2 | 5.05 | 10 |

Referring to Table 1, the electrode layer of the single-sided electrode disposed at the outermost side in the electrode assembly according to each of Examples 1-4 has a porosity of 30% or less and shows a curl of single-sided electrode of 30 mm or less, and thus it is thought that the electrode assembly has improved curling characteristics while showing maximized energy density. Meanwhile, in the case of the single-sided electrode used in the electrode assembly according to Comparative Example 1, it shows severe curling and rolls in, and thus determination of curling itself cannot be allowed (NG). In the case of the single-sided electrode used in the electrode assembly according to Comparative Example 2, the electrode layer of the single-sided electrode shows an excessively high porosity value.

**Claims**

1. An electrode assembly comprising:

   a mono-cell group comprising at least one mono-cell;
   a single-sided electrode stacked on at least one side of an upper outermost side and a lower outermost side of the mono-cell group; and
   a separator interposed between the mono-cell group and the single-sided electrode,
   wherein the single-sided electrode comprises a current collector and an electrode layer disposed merely on one side of the current collector,
   the electrode layer has a porosity of 30% or less, and
   the single-sided electrode shows a curl of 30 mm or less.

2. The electrode assembly according to claim 1, wherein the mono-cell group comprises one mono-cell, or two or more stacked mono-cells.

3. The electrode assembly according to claim 1, wherein a half-cell is further interposed between the mono-cell group and the single-sided electrode.

4. The electrode assembly according to claim 1 or 3, wherein a difference between the porosity of the single-sided electrode and the porosity of another electrode facing the single-sided electrode is 5% or less.

5. The electrode assembly according to claim 1, wherein the single-sided electrode comprises: a current collector; and an electrode layer disposed on the current collector and containing an active material and a binder,
wherein the binder is fibrilized to bind the active material.

6. The electrode assembly according to claim 5, wherein the electrode layer comprises an active material, a conductive material and a binder.

7. The electrode assembly according to claim 5, wherein the binder comprises polytetrafluoroethylene PTFE.

8. The electrode assembly according to claim 6, wherein the content of the active material is 80-98 parts by weight, the content of the conductive material is 0.5-10 parts by weight, and the content of the binder is 0.5-5 parts by weight.

9. The electrode assembly according to claim 5, wherein the electrode current collector further comprises a conductive primer layer on at least one surface thereof.

10. The electrode assembly according to claim 5, wherein the electrode layer is derived from a dry electrode film.

11. The electrode assembly according to claim 1, wherein the single-sided electrode is obtained by a method including the steps of:

preparing a mixture containing an active material and a binder;
kneading the mixture at 70-200°C under a pressure equal to or higher than ambient pressure to prepare mixture lumps;
pulverizing the mixture lumps to obtain a mixed powder for an electrode;
introducing the mixed powder for an electrode between a plurality of rolls to carry out calendering, thereby forming an electrode film; and
laminating the electrode film on a current collector.

12. The electrode assembly according to claim 11, wherein the step of kneading the mixture to prepare mixture lumps is carried out in a kneader under a pressure equal to or higher than ambient pressure.

13. The electrode assembly according to claim 11, wherein the electrode film has a pressing ratio of 10% or less in the step of laminating.

14. A secondary battery comprising the electrode assembly as defined in claim 1.

15. An energy storage system comprising the secondary battery as defined in claim 14 as a unit cell.

FIG. 1

<u>10</u>

FIG. 2

FIG. 3a

FIG. 3b

FIG. 4

FIG. 5

200

220

230

210

210

240

FIG. 6

300

314
312
311 } 310
313
315

+

322
321 } 320
323

314
312
311 } 310
313
315

} 330

320
310 } 330

320
310 } 330

320
310 } 330

FIG. 7

400

417 }
416 } 410
414
412 }
411 } 410'
413 }
415

+

427
426
428
424 } 420
422
421
423 }
425 }

← 420

← 420

431 }
432 } 430

FIG. 8

500

FIG. 9

FIG. 10

## INTERNATIONAL SEARCH REPORT

| International application No. |
|---|
| **PCT/KR2023/005413** |

**A. CLASSIFICATION OF SUBJECT MATTER**

**H01M 10/0585**(2010.01)i; **H01M 4/04**(2006.01)i; **H01M 4/13**(2010.01)i; **H01M 4/139**(2010.01)i; **H01M 4/62**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0585(2010.01); H01M 10/04(2006.01); H01M 2/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단면 전극 (end face electrode), 모노셀 (mono cell), 공극률 (porosity), 컬 (curl), 전극조립체 (electrode assembly)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0101839 A (LG CHEM, LTD.) 02 September 2019 (2019-09-02)<br>See claims 1 and 3; paragraph [0096]; and figure 2. | 1-15 |
| A | KR 10-2018-0080495 A (LG CHEM, LTD.) 12 July 2018 (2018-07-12)<br>See abstract; and claim 1. | 1-15 |
| A | KR 10-2015-0083525 A (LG CHEM, LTD.) 20 July 2015 (2015-07-20)<br>See entire document. | 1-15 |
| A | KR 10-2015-0083237 A (LG CHEM, LTD.) 17 July 2015 (2015-07-17)<br>See entire document. | 1-15 |
| A | KR 10-2015-0131527 A (LG CHEM, LTD.) 25 November 2015 (2015-11-25)<br>See entire document. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 August 2023** | **16 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005413**

| Patent document cited in search report | | Publication date (day/month/year) | Patent family member(s) | | | Publication date (day/month/year) |
|---|---|---|---|---|---|---|
| KR | 10-2019-0101839 A | 02 September 2019 | KR | 10-2421949 | B1 | 18 July 2022 |
| KR | 10-2018-0080495 A | 12 July 2018 | KR | 10-2197360 | B1 | 31 December 2020 |
| KR | 10-2015-0083525 A | 20 July 2015 | KR | 10-1675944 | B1 | 14 November 2016 |
| KR | 10-2015-0083237 A | 17 July 2015 | KR | 10-1684336 | B1 | 08 December 2016 |
| KR | 10-2015-0131527 A | 25 November 2015 | KR | 10-1713082 | B1 | 07 March 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220049212